# EUROPÄISCHE PATENTANMELDUNG

(11) **EP 2 910 873 A1**
(43) Veröffentlichungstag der Anmeldung: **26.08.2015**
(21) Anmeldenummer: 14155749.6
(22) Anmeldetag: 19.02.2014
(51) Int. Cl.: F25B 21/00, H02K 9/00

(54) **Kühlung einer elektrischen Maschine**

(71) Anmelder: Siemens Aktiengesellschaft, 80333 München (DE)
(72) Erfinder: Kümmlee, Horst, 13505 Berlin (DE); Seibicke, Frank, 14822 Borkheide (DE)

(57) **Zusammenfassung**

Die Erfindung betrifft eine elektrische Maschine umfassend einen ersten Kühlabschnitt (1), in welchem ein erstes Kühlmedium zur Kühlung der elektrischen Maschine vorgesehen ist, und einen zweiten Kühlabschnitt (2), in welchem ein zweites Kühlmedium vorgesehen ist. Um eine Alternative zu bekannten Kühlsystemen für elektrische Maschinen bereitzustellen, wird vorgeschlagen, dass die elektrische Maschine zumindest ein Aktivteil (3) und zumindest ein Wärmetransportelement (4) umfassend ein magnetokalorisches Material aufweist, wobei das zumindest eine Wärmetransportelement (4) zumindest teilweise und/oder zumindest vorübergehend mittels des zumindest einen Aktivteils (3) mit einem Magnetfeld (5) beaufschlagbar ist, wobei das zumindest eine Aktivteil (3) und das zumindest eine Wärmetransportelement (4) derart ausgestaltet sind, dass unter Ausnutzung des magnetokalorischen Effekts Abwärme vom ersten Kühlmedium an das zweite Kühlmedium übertragbar ist.

## Beschreibung

Die Erfindung betrifft eine elektrische Maschine umfassend einen ersten Kühlabschnitt, in welchem ein erstes Kühlmedium zur Kühlung der elektrischen Maschine vorgesehen ist, und einen zweiten Kühlabschnitt, in welchem ein zweites Kühlmedium vorgesehen ist.

Beim Betrieb elektrischer Maschinen entsteht eine Vielzahl von Verlusten, die in Wärme umgewandelt werden und zur Erwärmung der elektrischen Maschine führen.

Um eine unzulässige Erhitzung der Materialien in der elektrischen Maschine zu verhindern, muss eine ausreichende Kühlung gewährleistet werden. Dies kann im einfachsten Fall über natürliche Konvektion an der Oberfläche geschehen. Bei Maschinen ab bestimmten Leistungs- und Größenklassen sollte die Kühlung über Kühlkreisläufe und Wärmetauscher realisiert werden.

Die Temperaturdifferenz zwischen dem Kühlmedium im Primärkreis im Inneren der Maschine und dem Kühlmedium im Sekundärkreis außerhalb der Maschine ist ein charakteristisches Merkmal für die Kühlung der Maschine. Dabei liegt die Ausgangstemperatur im Primärkreis im Allgemeinen über der Kalttemperatur des Sekundärmediums. Entsprechend der Ausgangstemperatur des Sekundärmediums und dieser Temperaturdifferenz bestimmt sich die zulässige Aufheizung der elektrischen Maschine bis zur maximal zulässigen Wicklungstemperatur.

Der Erfindung liegt die Aufgabe zugrunde, eine Alternative zu bekannten Kühlsystemen für elektrische Maschinen bereitzustellen.

Diese Aufgabe wird durch eine elektrische Maschine der eingangs genannten Art dadurch gelöst, dass die elektrische Maschine zumindest ein Aktivteil und zumindest ein Wärmetransportelement umfassend ein magnetokalorisches Material aufweist, wobei das zumindest eine Wärmetransportelement zumindest teilweise und/oder zumindest vorübergehend mittels des zumindest einen Aktivteils mit einem Magnetfeld beaufschlagbar ist, wobei das zumindest eine Aktivteil und das zumindest eine Wärmetransportelement derart ausgestaltet sind, dass unter Ausnutzung des magnetokalorischen Effekts Abwärme vom ersten Kühlmedium an das zweite Kühlmedium übertragbar ist.

Als magnetokalorisches Material kommen beispielsweise paramagnetische Salze, wie Cermagnesiumnitrat, oder Gadolinium (Gd) und Gadolinium-Legierungen, wie zum Beispiel GdDy, GdTb, in Frage. Weiterhin können Materialien eingesetzt werden, welche als GMCE (Riesen-Magnetokalorischer Effekt von englisch: "giant magnetocaloric effect") Materialien bekannt sind, wie zum Beispiel die Legierungen Gd₅(SiₓGe₁₋ₓ)₄, La (FeₓSi₁₋ₓ)₁₃Hₓ und MnFeP₁₋ₓAsₓ.

Insbesondere kann der erste Kühlabschnitt als geschlossener Kühlkreislauf bzw. Primärkreis ausgestaltet werden, so dass ein Austausch oder ein Vermischen des ersten Kühlmediums mit dem zweiten Kühlmedium zumindest weitestgehend verhindert wird. Prinzipiell kann der zweite Kühlabschnitt unabhängig vom ersten Kühlabschnitt ebenfalls als geschlossener Kühlkreislauf bzw. Sekundärkreis ausgestaltet werden. Alternativ ist denkbar, dass der erste Kühlabschnitt und/oder der zweite Kühlabschnitt offen ausgestaltet werden, in dem Sinn, dass das erste Kühlmedium bzw. das zweite Kühlmedium sich mit anderen Kühlmedien vermischen kann und nicht notwendigerweise jeweils ein geschlossener Kreislauf vorliegen muss. Als jeweiliges Kühlmedium wird vorzugsweise ein gasförmiges oder flüssiges Fluid eingesetzt, zum Beispiel Luft, Wasser oder Öl, wobei als erstes Kühlmedium und als zweites Kühlmedium gleiche oder unterschiedliche Fluide verwendet werden können.

Ein Aspekt der vorliegenden Erfindung ist, die Ausgangs- bzw. Kalttemperatur des ersten Kühlmediums im ersten Kühlabschnitt der elektrischen Maschine durch eine Nutzung des magnetkalorischen Effekts zu senken. Gleichzeitig wird die Temperatur des zweiten Kühlmediums im zweiten Kühlabschnitt erhöht, so dass eine vergrößerte Temperaturdifferenz zwischen dem ersten Kühlmedium und dem zweiten Kühlmedium erreichbar ist.

Beim magnetokalorischen Effekt wird ein geeignetes Material durch eine Erhöhung einer Beaufschlagung bzw. durch eine Verringerung der Beaufschlagung mit einem Magnetfeld erwärmt bzw. abgekühlt. Dies kommt dadurch zustande, dass das Material ohne Einwirkung eines Magnetfeldes magnetische Momente aufweist, welche keine Vorzugsrichtung aufweisen. In einem adiabatischen Prozess wird das Material einem Magnetfeld ausgesetzt, wodurch sich die magnetischen Momente ausrichten und die mit der Ordnung der magnetischen Momente verknüpfte Entropie sinkt. Da der Prozess adiabatisch ist, bleibt die Gesamtentropie erhalten, so dass die mit der Temperatur des Materials verknüpfte Entropie steigt, was in einem Temperaturanstieg des Materials resultiert. Umgekehrt geht die Vorzugsrichtung der magnetischen Momente durch das Ende der Beaufschlagung mit einem Magnetfeld während eines adiabatischen Prozesses verloren, so dass die mit der Ordnung der magnetischen Momente verknüpfte Entropie steigt. Wiederum bleibt die Gesamtentropie erhalten, so dass die mit der Temperatur des Materials verknüpfte Entropie sinkt, weshalb ein Temperaturabfall des Materials zu beobachten ist.

Die zumindest teilweise und/oder zumindest vorübergehende Beaufschlagung des zumindest einen Wärmetransportelementes ist mittels des zumindest einen Aktivteils durchführbar. Beispielsweise ist das jeweilige Aktivteil elektrisch betreibbar und als elektrische Wicklung, Spule oder Spulenpaar ausgestaltet. Das jeweilige Aktivteil kann allerdings auch mithilfe von Permanentmagneten oder dergleichen realisiert werden. Insbesondere kann eine Anordnung vorgesehen sein, bei welcher zumindest ein Magnetpaar, beispielsweise ein Spulenpaar oder Permanentmagnetpaar, einen Zwischenraum zwischen dem Magnetpaar aufweist, wobei sich das Wärmetransportelement zumindest teilweise und/oder zumindest vorübergehend im Zwischenraum befindet.

Beispielsweise kann das vom zumindest einen Aktivteil erzeugbare Magnetfeld zeitlich variiert bzw. eingeschaltet und ausgeschaltet werden, um die zumindest teilweise und/oder zumindest vorübergehende Beaufschlagung des jeweiligen Wärmetransportelementes zu erreichen. Zusätzlich oder alternativ kann eine Relativbewegung des jeweiligen Aktivteils in Bezug auf das jeweilige Wärmetransportelement dazu verwendet werden, um die angesprochene Beaufschlagung zu erreichen. Beispielsweise kann hierzu das jeweilige Aktivteil eine translatorische oder rotatorische Bewegung bei einem jeweiligen stillstehenden Wärmetransportelement vollführen und/oder umgekehrt. Beispielsweise kann zur erläuterten Erwärmung bzw. Abkühlung des jeweiligen Wärmetransportelements bei der Beaufschlagung bzw. beim dem Ende der Beaufschlagung mit dem Magnetfeld auch eine durch die elektrische Maschine erzeugte translatorische und/oder rotatorische Bewegung genutzt werden. Somit können die Translation bzw. die Rotation der elektrischen Maschine mitgenutzt werden, indem ein jeweiliges Wärmetransportelement auf Basis des magnetokalorischen Effekts zur Kühlung elektrischen Maschine betrieben wird, wobei das jeweilige Wärmetransportelement beispielsweise über eine mechanische Übersetzung fest mit bzw. baufest auf einem beweglichen Teil der elektrischen Maschine verbunden ist. Auch eine Kombination der zeitlichen Variation des Magnetfelds mit der Relativbewegung kann dazu verwendet werden, um die zumindest teilweise und/oder zumindest vorübergehende Beaufschlagung des jeweiligen Wärmetransportelementes sicherzustellen.

Die zumindest teilweise und/oder zumindest vorübergehende Beaufschlagung des jeweiligen Wärmetransportelementes ermöglicht schließlich, dass Abwärme vom ersten Kühlmedium unter Ausnutzung des magnetokalorischen Effekts an das zweite Kühlmedium übertragbar ist. Insbesondere können der erste Kühlabschnitt und der zweite Kühlabschnitt hierzu geeignet ausgestaltet werden. Vorzugsweise ist vorgesehen, dass die Abwärme des ersten Kühlmediums an das jeweilige Wärmetransportelement übertragbar ist, wenn das jeweilige Wärmetransportelement zumindest teilweise und/oder zumindest vorübergehend mittels des magnetokalorischen Effekts gekühlt wurde. Vorteilhafterweise ist die Abwärme des jeweiligen Wärmetransportelementes an das zweite Kühlmedium übertragbar, wenn das jeweilige Wärmetransportelement zumindest teilweise und/oder zumindest vorübergehend mittels des magnetokalorischen Effekts erhitzt wurde.

Insgesamt wird somit eine alternative zu bekannten Kühlsystemen für elektrische Maschinen vorgeschlagen, wobei insbesondere ein verbesserter Abtransport der Abwärme des ersten Kühlmediums und somit eine verbesserte Kühlung der elektrischen Maschine ermöglicht wird. Durch die Absenkung der Kalttemperatur des Primärmediums vergrößert sich beispielsweise die zulässige Aufheizung bzw. die Ausnutzung der elektrischen Maschine.

Bei einer vorteilhaften Ausgestaltung der Erfindung ist das jeweilige Wärmetransportelement um eine Rotationsachse drehbar und/ oder translatorisch bewegbar in der elektrischen Maschine angeordnet, wobei ein erster Elementbereich des jeweiligen Wärmetransportelementes in einem ersten Maschinenbereich der elektrischen Maschine angeordnet ist, welcher mittels des zumindest einen Aktivteils mit dem Magnetfeld beaufschlagbar ist, wobei ein zweiter Elementbereich des jeweiligen Wärmetransportelementes in einem zweiten Maschinenbereich außerhalb des ersten Maschinenbereichs angeordnet ist.

Insbesondere wenn die elektrische Maschine als Elektromotor oder Generator ausgeführt ist, kann die Rotationsachse die Drehachse einer Welle oder eines Rotors der elektrischen Maschine sein. Dabei kann vorgesehen sein, dass das jeweilige Wärmetransportelement beispielsweise drehfest oder über ein Getriebe mit der Welle oder dem Rotor verbunden ist.

Das jeweilige Wärmetransportelement weist einen ersten Elementbereich und einen zweiten Elementbereich auf, welche beispielsweise durch die beiden Hälften des jeweiligen Wärmetransportelementes gebildet werden können. Der erste Elementbereich ist dabei im ersten Maschinenbereich angeordnet, welcher mittels des zumindest einen Aktivteils mit dem Magnetfeld beaufschlagbar ist, so dass auch der erste Elementbereich mit dem Magnetfeld beaufschlagbar ist. Der zweite Elementbereich befindet sich im zweiten Maschinenbereich, welcher außerhalb des ersten Maschinenbereichs angeordnet ist. Insbesondere kann der erste Maschinenbereich ein Bereich der elektrischen Maschine sein, welcher mit einem besonders starken Magnetfeld beaufschlagbar ist, wohingegen der zweite Maschinenbereich ein Bereich der elektrischen Maschine sein kann, welcher lediglich mit einem vergleichsweise schwachen oder gar keinem Magnetfeld beaufschlagbar ist oder beaufschlagt wird.

Vollführt das jeweilige Wärmetransportelement eine Drehung, ist der erste Elementbereich bzw. der zweite Elementbereich jener Bereich, welcher momentan im ersten Maschinenbereich bzw. im zweiten Maschinenbereich angeordnet ist. Betrachtet man einen bestimmten Punkt des jeweiligen, um die Rotationsachse rotierenden Transportelementes, so befindet sich dieser Punkt während der Rotation somit zeitweise im ersten Elementbereich und zeitweise im zweiten Elementbereich, je nachdem ob sich der Punkt momentan im ersten Maschinenbereich oder im zweiten Maschinenbereich befindet.

Auf diese Art und Weise kann ein wirkungsvoller Kreisprozess erhalten werden, bei dem einzelne Punkte des jeweiligen Wärmetransportelementes die oben erläuterten Prozesse der adiabatischen Erwärmung und der adiabatischen Abkühlung durchlaufen und somit Abwärme des ersten Kühlmediums besonders gut aufnehmen können und an das zweite Kühlmedium besonders gut abgeben können. Dabei liegen im Allgemeinen adiabatische Prozesse schon bei vergleichsweise niedrigen Drehzahlen vor.

Anstelle der erläuterten Rotationsbewegung kann auch vorgesehen sein, dass das jeweilige Wärmetransportelement translatorisch in der elektrischen Maschine bewegbar ist, was insbesondere bei einem Linearmotor der Fall ist. Auch für eine translatorische Bewegung des jeweiligen Wärmetransportelementes kann die elektrische Maschine derart ausgestaltet sein, dass die oben erläuterten ersten und zweiten Maschinenbereiche vorhanden sind sowie dass das jeweilige Wärmetransportelement die oben erläuterten ersten und zweiten Elementbereiche aufweist. Dabei sind auch Mischformen einer rotatorischen und einer translatorische Bewegung des jeweiligen Wärmetransportelementes realisierbar.

Insgesamt kann somit zur erläuterten Erwärmung bzw. Abkühlung des jeweiligen Wärmetransportelements die durch die elektrische Maschine erzeugte translatorische und/oder rotatorische Bewegung genutzt werden, insbesondere wenn das jeweilige Wärmetransportelement über einen Läufer der elektrischen Maschine angetrieben wird.

Bei einer weiteren vorteilhaften Ausgestaltung der Erfindung ist das jeweilige Aktivteil dabei derart ausgestaltet, dass das Magnetfeld im Wesentlichen entlang der Rotationsachse ausgerichtet ist.

Der erste Elementbereich und der zweite Elementbereich können dabei im Querschnitt senkrecht zur Rotationsachse betrachtet beispielsweise zwei sich gegenüberliegende Hälften des jeweiligen Wärmetransportelementes sein. Das jeweilige Aktivteil kann derart ausgestaltet sein, dass der erste Elementbereich, insbesondere eine der beiden Hälften, mit einem besonders starken Magnetfeld in Richtung der Rotationsachse beaufschlagt werden kann, wohingegen der zweite Elementbereich, insbesondere die andere Hälfte, mit einem vergleichsweise schwachen oder gar keinem Magnetfeld beaufschlagbar ist oder beaufschlagt wird.

Bei einer alternativen weiteren vorteilhaften Ausgestaltung der Erfindung ist das jeweilige Aktivteil dabei derart ausgestaltet, dass das Magnetfeld im Wesentlichen senkrecht zur Rotationsachse ausgerichtet ist.

Der erste Elementbereich und der zweite Elementbereich können wiederum im Querschnitt senkrecht zur Rotationsachse betrachtet beispielsweise zwei sich gegenüberliegende Hälften des jeweiligen Wärmetransportelementes sein. Das jeweilige Aktivteil kann derart ausgestaltet sein, dass der erste Elementbereich, insbesondere eine der beiden Hälften, mit einem besonders starken Magnetfeld senkrecht zur Rotationsachse beaufschlagt werden kann, wohingegen der zweite Elementbereich, insbesondere die andere Hälfte, mit einem vergleichsweise schwachen oder gar keinem Magnetfeld beaufschlagbar ist oder beaufschlagt wird.

Für das Beispiel, dass die Rotationsachse in Richtung der z-Achse eines kartesischen Koordinatensystems weist, kann die Richtung des Magnetfeldes beispielsweise einheitlich in x-Richtung weisen. Denkbar ist auch, dass das Magnetfeld räumlich nicht homogen ist und die Magnetfeldlinien beispielsweise einen Bogen mit Komponenten in x-Richtung und in y-Richtung beschreiben.

Bei einer weiteren vorteilhaften Ausgestaltung der Erfindung ist der erste Kühlabschnitt dabei derart ausgestaltet, dass Abwärme von dem ersten Kühlmedium an den zweiten Elementbereich übertragbar ist, wobei der zweite Kühlabschnitt derart ausgestaltet ist, dass Abwärme vom ersten Elementbereich an das zweite Kühlmedium übertragbar ist.

Der erste Kühlabschnitt bzw. der Primärkreis ist hierfür insbesondere derart ausgestaltet, dass das erste Kühlmedium zum jeweiligen zweiten Elementbereich führbar ist und, nachdem das erste Kühlmedium seine Abwärme an den jeweiligen zweiten Elementbereich übertragen hat, vom jeweiligen zweiten Elementbereich zu den zu kühlenden Teilen der elektrischen Maschine führbar ist. Entsprechend ist der zweite Kühlabschnitt bzw. der Sekundärkreis so ausgestaltet, dass das zweite Kühlmedium zum ersten Elementbereich führbar ist und, nachdem das zweite Kühlmedium die Abwärme des ersten Elementbereiches aufgenommen hat, vom jeweiligen ersten Elementbereich beispielsweise zu einer Wärmesenke führbar ist.

Vorzugsweise ist im ersten Kühlabschnitt und/oder im zweiten Kühlabschnitt eine Strömungsmaschine vorgesehen, mittels welcher die Strömung des jeweiligen Kühlmediums antreibbar ist.

Bei einer weiteren vorteilhaften Ausgestaltung der Erfindung weist das jeweilige Wärmetransportelement zumindest vier Teilbereiche auf, wobei bei einer gegebenen Drehrichtung des jeweiligen Wärmetransportelementes
- der erste Teilbereich innerhalb des ersten Elementbereiches dort angeordnet ist, wo eine lokale Temperatur des Wärmetransportelementes mittels einer lokalen Erhöhung der magnetischen Ordnung des Wärmetransportelementes erhöhbar ist,
- der zweite Teilbereich innerhalb des ersten Elementbereiches in Drehrichtung im Anschluss an den ersten Teilbereich angeordnet ist,
wobei Abwärme vom jeweiligen Wärmetransportelement über den zweiten Teilbereich an das zweite Kühlmedium übertragbar ist,
- der dritte Teilbereich innerhalb des zweiten Elementbereiches dort angeordnet ist, wo eine lokale Temperatur des Wärmetransportelementes mittels einer lokalen Erniedrigung der magnetischen Ordnung des Wärmetransportelementes erniedrigbar ist,
- der vierte Teilbereich innerhalb des zweiten Elementbereiches in Drehrichtung im Anschluss an den dritten Teilbereich angeordnet ist,
wobei Abwärme vom ersten Kühlmedium an das jeweilige Wärmetransportelement über den vierten Teilbereich übertragbar ist.

Der erste Teilbereich ist somit jener Bereich des jeweiligen Wärmetransportelementes, welcher der Erhöhung des Magnetfeldes ausgesetzt ist, so dass die magnetischen Momente in jenem Bereich zu einer Vorzugsrichtung hin ausgerichtet und damit geordnet werden. Da die Erhöhung des Magnetfeldes im allgemeinen schon bei vergleichsweise niedrigen Drehzahlen innerhalb kurzer Zeit stattfindet, liegt in der Regel ein adiabatischer Prozess vor, so dass gleichzeitig die lokale Temperatur in jenem Bereich zusätzlich steigt.

Das Material des zweiten Teilbereichs hat den Schritt der adiabatischen Erwärmung schon durchlaufen und weist damit eine zusätzlich erhöhte Temperatur auf. Das zweite Kühlmedium ist mit dem zweiten Teilbereich in thermischem Kontakt, so dass die Abwärme des zweiten Teilbereichs an das zweite Kühlmedium übertragbar ist, wodurch der zweite Teilbereich abgekühlt wird.

Das jeweilige Wärmetransportelement ist im dritten Teilbereich der Erniedrigung des Magnetfeldes ausgesetzt, wodurch die magnetischen Momente in jenem Bereich tendenziell ihre Vorzugsrichtung verlieren und damit ungeordneter werden. Da die Erniedrigung des Magnetfeldes in der Regel innerhalb kurzer Zeit stattfindet, liegt wiederum ein adiabatischer Prozess vor, so dass gleichzeitig die lokale Temperatur in jenem Bereich zusätzlich sinkt.

Das Material des vierten Teilbereichs wurde schon der adiabatischen Abkühlung unterworfen und weist daher eine zusätzlich erniedrigte Temperatur auf. Das erste Kühlmedium, welches in thermischem Kontakt mit dem vierten Teilbereich ist, kann daher besonders viel Abwärme an den vierten Teilbereich übertragen, wodurch der vierte Teilbereich erwärmt wird.

Durch die Drehung des jeweiligen Wärmetransportelementes durchlaufen die einzelnen Punkte des jeweiligen Wärmetransportelementes die oben erläuterten Schritte, so dass ein Kreisprozess ausgebildet wird.

Bei einer weiteren vorteilhaften Ausgestaltung der Erfindung ist der erste Kühlabschnitt dabei derart ausgestaltet, dass das erste Kühlmedium zunächst zum vierten Teilbereich und anschließend zum dritten Teilbereich des jeweiligen Wärmetransportelementes führbar ist.

Wie oben erläutert weist der vierte Teilbereich des jeweiligen Wärmetransportelementes eine höhere Temperatur als der dritte Teilbereich auf, so dass das erste Kühlmedium zunächst zum vierten, wärmeren Teilbereich geführt wird. Das erste Kühlmedium wird anschließend zum dritten, kühleren Teilbereich geführt, so dass insgesamt ein besonders wirkungsvoller Wärmeaustausch zwischen dem ersten Kühlmedium und dem jeweiligen Wärmetransportelementes ermöglicht wird. Insgesamt wird dadurch eine Art Gegenstromprinzip verwirklicht.

Bei einer weiteren vorteilhaften Ausgestaltung der Erfindung ist der zweite Kühlabschnitt dabei derart ausgestaltet ist, dass das zweite Kühlmedium zunächst zweiten Teilbereich und anschließend zum ersten Teilbereich des jeweiligen Wärmetransportelementes führbar ist.

Das zweite Kühlmedium wird somit an den, wie oben erläutert, zweiten, kühleren Teilbereich des jeweiligen Wärmetransportelementes geführt. Anschließend wird das zweite Kühlmedium zum ersten, wärmeren Teilbereich geführt, wodurch ein besonders wirkungsvoller Wärmeaustausch zwischen dem jeweiligen Wärmetransportelement und dem zweiten Kühlmedium ermöglicht wird. Durch eine derartige Ausgestaltung wird wiederum eine Art Gegenstromprinzip verwirklicht.

Bei einer weiteren vorteilhaften Ausgestaltung der Erfindung weist das jeweilige Wärmetransportelement an seiner Oberfläche zumindest ein konvexes Element zur Oberflächenvergrößerung auf.

Das zumindest eine konvexe Element dient der Oberflächenvergrößerung, wodurch der Austausch mit dem ersten Kühlmedium bzw. mit dem zweiten Kühlmedium besonders wirkungsvoll ausgestaltet werden kann. Insbesondere kann dadurch die Menge der an das jeweilige Wärmetransportelement übertragbaren Abwärme bzw. von dem jeweiligen Wärmetransportelement übertragbaren Abwärme erhöht werden. Vorzugsweise umfasst das jeweilige konvexe Element das magnetokalorische Material.

Bei einer weiteren vorteilhaften Ausgestaltung der Erfindung ist das jeweilige konvexe Element dabei als Rippe, Steg oder Propellerblatt ausgeführt.

Die Rippe kann dabei insbesondere in Umfangsrichtung umlaufend oder entlang der axialen Richtung verlaufend ausgestaltet sein, wobei auch Mischformen insbesondere eine Ausgestaltung in Schraubenbahnform vorgesehen sein können. Beispielsweise kann der Steg als hervorstehender Dorn oder dergleichen ausgeführt sein.

Durch die Ausgestaltung des jeweiligen konvexen Elementes als Propellerblatt wird zum einen die für den Wärmeaustausch zur Verfügung stehende Oberfläche vergrößert, so dass die austauschbare Wärmemenge erhöht wird, und zum anderen kann das jeweilige Propellerblatt dazu eingesetzt werden, die Strömung des jeweiligen Kühlmediums anzutreiben. Insbesondere können mehrere Propellerblätter vorgesehen sein, so dass insgesamt beispielsweise ein Radiallüfter oder ein Axiallüfter nachgebildet werden, insbesondere wenn bezüglich der beiden Kühlmedien jeweils eine Gleichstromkühlung verwirklicht wird. Gute Kühlergebnisse lassen sich jedoch auch erreichen, indem bezüglich der beiden Kühlmedien jeweils eine Gegenstromkühlung vorgesehen ist.

Bei einer weiteren vorteilhaften Ausgestaltung der Erfindung ist zumindest ein Umlenkelement vorgesehen, mittels welchem jeweils das erste Kühlmedium und/oder das zweite Kühlmedium zum jeweiligen Wärmetransportelement hin führbar ist bzw. vom jeweiligen Wärmetransportelement weg führbar ist und mittels welchem jeweils der erste Kühlabschnitt strömungstechnisch vom zweiten Kühlabschnitt im Wesentlichen abtrennbar ist.

Um Strömungsverluste zu vermindern, ist im ersten Kühlabschnitt und/oder im zweiten Kühlabschnitt jeweils zumindest ein Umlenkelement vorgesehen. Insbesondere kann auch ein jeweiliges Strömungselement zum Einsatz kommen, mittels welchem die Strömung des jeweiligen Kühlmediums in Strömungsrichtung vor bzw. nach dem jeweiligen Elementbereich verlangsamt bzw. beschleunigt wird, indem der zur Verfügung stehende Strömungsquerschnitt durch eine diffusorartige bzw. düsenartige Ausgestaltung des jeweiligen Strömungselementes in Strömungsrichtung vergrößert bzw. verkleinert wird. Dabei kann das jeweilige Strömungselement insbesondere als Umlenkelement ausgeführt sein.

Das zumindest eine Umlenkelement kann insbesondere für die Kühlmittelführung von bzw. zu den vier oben erläuterten Teilbereichen eingesetzt werden. Beispielsweise kann das erste Kühlmedium zunächst zum vierten, wärmeren Teilbereich geführt, indem zumindest ein geeignet ausgeformtes Umlenkelement vorgesehen ist und insbesondere ein geeignet ausgestalteter Kanal gebildet wird. Anschließend wird das erste Kühlmedium durch das zumindest eine Umlenkelement zum dritten, kühleren Teilbereich geführt und schließlich insbesondere zu den zu kühlenden teilen der elektrischen Maschine. Entsprechend kann das zweite Kühlmedium durch das zumindest eine Umlenkelement bzw. einen geeignet ausgestalteter Kanal an den zweiten, kühleren Teilbereich des jeweiligen Wärmetransportelementes geführt werden. Danach wird das zweite Kühlmedium mittels des zumindest einen Umlenkelemente zum ersten, wärmeren Teilbereich geführt und schließlich insbesondere einer Wärmesenke zugeführt.

Bei einer weiteren vorteilhaften Ausgestaltung der Erfindung weist die elektrische Maschine einen Läufer und einen Ständer auf, wobei zumindest ein Teil des Läufers und/oder des Ständers als das Aktivteil ausgebildet ist.

Für das Beispiel von rotatorischen elektrischen Maschinen wird der Läufer auch als Rotor und der Ständer als Stator bezeichnet.

Die elektrische Maschine ist beispielsweise zur Erzeugung eines Drehmoments oder zur Erzeugung von elektrischer Energie ausgelegt, wobei der Läufer und der Ständer entsprechend ausgestaltet sind. Zusätzlich fungieren der Läufer und/oder der Ständer bzw. zumindest ein Teil des Läufers und/oder des Ständers als das oben erläuterte Aktivteil, welches das zumindest eine Wärmetransportelement mit dem Magnetfeld Beaufschlagen kann.

Insbesondere kann somit zur Erzeugung des notwendigen Magnetfeldes auch ein Ableger eines Haupterregerfeldes der elektrischen Maschine genutzt werden. Beispielsweise ist der Ständer dazu ausgelegt, ein Haupterregerfeld bereitzustellen, in welchem der Läufer beweglich angeordnet ist. Entsprechend stellt der Ständer bzw. ein Teil des Ständers das erläuterte Aktivteil dar. Vorzugsweise ist die entsprechende elektrische Maschine als Synchronmaschine ausgestaltet.

Denkbar ist auch, dass der Läufer als fremderregter oder permanenterregter Rotor ausgestaltet ist, welcher koaxial zum Ständer angeordnet ist. Dabei weist der Läufer eine größere axiale Ausdehnung als der Ständer bzw. das Ständerblechpaket auf, so dass ein Teil des Läufers den Ständer in axialer Richtung überragt. Das zumindest eine Wärmetransportelement ist vorzugsweise in axialer Verlängerung des Ständers bzw. des Ständerblechpakets derart angeordnet, dass es mit dem überragenden Teil des Läufers wechselwirken kann. Bei einer Bewegung des Läufers ist das zumindest eine Wärmetransportelement mit seinem magnetokalorischen Material somit Schwankungen des vom fremderregten oder permanenterregten Rotor erzeugten Magnetfeldes unterworfen, so dass die oben erläuterten adiabatischen Abkühlungs- und Erwärmungsprozesse stattfinden.

Umgekehrt kann auch der Ständer eine größere axiale Ausdehnung als der Läufer bzw. das Läuferblechpaket aufweisen, wobei das zumindest eine Wärmetransportelement beispielsweise in axialer Verlängerung des Läufers derart angeordnet ist, dass es mit dem überragenden Teil des Ständers wechselwirken kann.

Bei Linearmaschinen ist eine entsprechende Ausgestaltung des Ständers, des Läufers und des Wärmetransportelementes möglich.

Weiterhin Fall kann vorgesehen sein, dass die elektrische Maschine als Außenläufer, insbesondere als Windkraftgenerator, ausgeführt ist. Der radial außen angeordnete Läufer verfügt dabei über zumindest ein Aktivteil, welches jeweils beispielsweise als Permanentmagnet oder elektrische Wicklung für einen fremderregten Läufer ausgestaltet ist. Insbesondere der radial innen angeordnete Ständer und/oder ein radial weiter außen angeordnetes Gehäuseteil weist das zumindest eine Wärmetransportelement auf. Dabei sind mit dem Läufer mitrotierende Umlenkelemente vorgesehen, mittels welchen der oben erläuterte erste Kühlabschnitt, der zweite Kühlabschnitt bzw. derartige Kühlkanäle ausgebildet werden können, dass ein erstes und ein zweites Kühlmedium separat geführt werden und Abwärme vom ersten Kühlmedium an das jeweilige Wärmetransportelement übertragbar ist, nachdem dieses eine adiabatischen Abkühlung durchlaufen hat, wobei zusätzlich Abwärme vom jeweiligen Wärmetransportelement an das zweite Kühlmedium übertragbar ist, nachdem das jeweilige Wärmetransportelement eine adiabatischen Erwärmung durchlaufen hat.

Bei einer weiteren vorteilhaften Ausgestaltung der Erfindung ist die elektrische Maschine als Generator oder Elektromotor ausgeführt.

Bei einer weiteren vorteilhaften Ausgestaltung der Erfindung ist die elektrische Maschine mit einer Leistung von mehr als 1 MW, insbesondere mehr als 10 MW, betreibbar.

Vorteilhafterweise ist die elektrische Maschine als Außenläufer, insbesondere als Windkraftgenerator, ausgeführt.

Im Folgenden wird die Erfindung anhand der in den Figuren dargestellten Ausführungsbeispiele näher beschrieben und erläutert. Es zeigen:
- FIG 1: ein erstes Ausführungsbeispiel der erfindungsgemäßen elektrischen Maschine,
- FIG 2: ein zweites Ausführungsbeispiel der erfindungsgemäßen elektrischen Maschine,
- FIG 3: eine alternative Ansicht des zweiten Ausführungsbeispiels,
- FIG 4: ein drittes Ausführungsbeispiel der erfindungsgemäßen elektrischen Maschine,
- FIG 5: ein viertes Ausführungsbeispiel der erfindungsgemäßen elektrischen Maschine,
- FIG 6: eine alternative Ansicht des vierten Ausführungsbeispiels, und
- FIG 7: ein fünftes Ausführungsbeispiel der erfindungsgemäßen elektrischen Maschine.

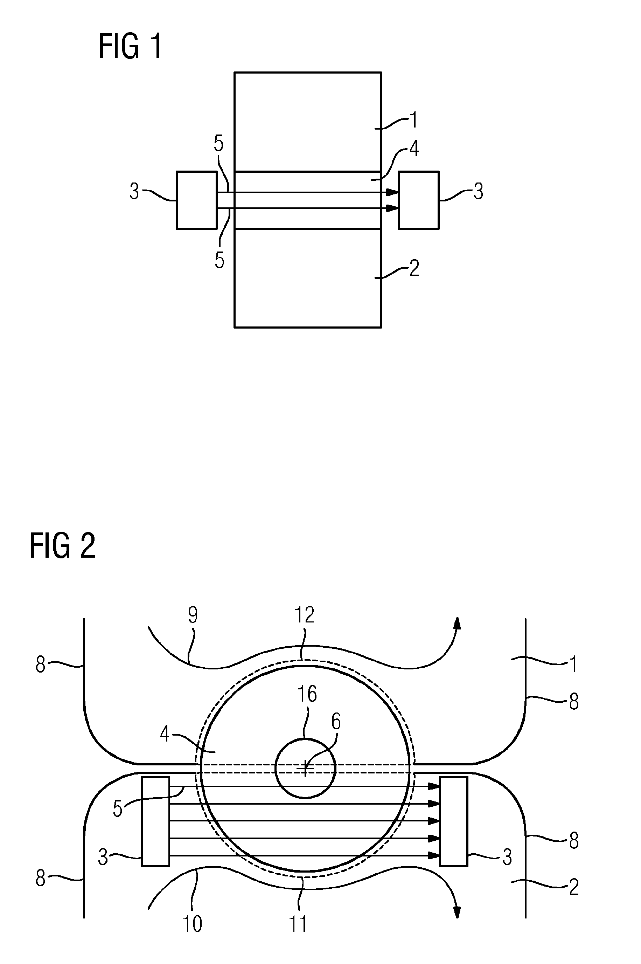

Figur 1 zeigt ein erstes Ausführungsbeispiel der erfindungsgemäßen elektrischen Maschine.

Die elektrische Maschine weist einen ersten Kühlabschnitt 1 und einen zweiten Kühlabschnitt 2 auf, wobei im ersten Kühlabschnitt 1 ein erstes Kühlmedium zur Kühlung der elektrischen Maschine vorgesehen ist. Zwischen dem ersten Kühlabschnitt 1 und dem zweiten Kühlabschnitt 2 ist ein Wärmetransportelement 4 angeordnet, welches ein magnetokalorisches Material umfasst. Die elektrische Maschine verfügt über ein Aktivteil 3, mittels welchem das Wärmetransportelement 4 zumindest teilweise und/oder zumindest vorübergehend mit einem Magnetfeld 5 beaufschlagbar ist. Die mit dem Bezugszeichen 5 versehenen Pfeile sollen in der Figur 1 dabei die Magnetfeldlinien des Magnetfeldes 5 andeuten. Das Aktivteil 3 und das Wärmetransportelement 4 sind dabei derart ausgestaltet, dass unter Ausnutzung des magnetokalorischen Effekts Abwärme vom ersten Kühlmedium an ein im zweiten Kühlabschnitt 2 vorgesehenes zweites Kühlmedium übertragbar ist.

Figur 2 zeigt ein zweites Ausführungsbeispiel der erfindungsgemäßen elektrischen Maschine, wobei ein Querschnitt durch die elektrische Maschine dargestellt ist. Gleiche Bezugszeichen wie in Figur 1 bezeichnen dabei gleiche Gegenstände.

Gemäß dem zweiten Ausführungsbeispiel ist das Wärmetransportelement 4 um eine Welle 16 herum angeordnet, welche um eine Rotationsachse 6 der elektrischen Maschine drehbar ist. Ein erster Elementbereich 11 des Wärmetransportelementes 4 befindet sich in einem ersten Maschinenbereich der elektrischen Maschine, welcher mittels des Aktivteils 3 mit dem Magnetfeld 5 beaufschlagbar ist. Dabei ist das Aktivteil 3 relativ zum Wärmetransportelement 4 derart positioniert, dass die in Figur 2 unten dargestellte Hälfte des Wärmetransportelementes 4 mit dem Magnetfeld 5 beaufschlagbar ist. Diese mit dem Magnetfeld 5 beaufschlagbare Hälfte des Wärmetransportelementes 4 stellt den ersten Elementbereich 11 dar. Ein zweiter Elementbereich 12 des Wärmetransportelementes 4 ist in einem zweiten Maschinenbereich außerhalb des ersten Maschinenbereichs angeordnet, wobei der zweite Elementbereich nicht mit dem Magnetfeld 5 beaufschlagbar ist.

Vollführen die Welle 16 und das Wärmetransportelement 4 eine Drehbewegung um die Rotationsachse 6, so befinden sich Teile des Wärmetransportelementes 4 zeitweise im ersten Maschinenbereich, welcher mit einem Magnetfeld 5 beaufschlagbar ist, und andere Teile des Wärmetransportelementes 4 zum gleichen Zeitpunkt im zweiten Maschinenbereich. Entsprechend befinden sich Teile des Wärmetransportelementes 4 zeitweise im ersten Elementbereich 11 und andere Teile des Wärmetransportelementes 4 zum gleichen Zeitpunkt zweiten Elementbereich 12. Zu einem späteren Zeitpunkt können sich die jeweiligen Teile des Wärmetransportelementes 4 aufgrund der Drehbewegung jeweils im anderen Elementbereich befinden.

Im Rahmen des Ausführungsbeispiels wird das erste bzw. zweite Kühlmedium derart am Wärmetransportelement 4 entlang geführt, dass sich eine Kühlmittelströmung ausbildet, wie durch den mit dem Bezugszeichen 9 bzw. 10 versehenen Pfeil angedeutet. Zur Führung des jeweiligen Kühlmediums sind Umlenkelemente 8 vorgesehen. Insbesondere wird somit bezüglich eines der Kühlmedien eine Gleichstromkühlung und bezüglich des anderen der Kühlmedien eine Gegenstromkühlung dargestellt.

Das Aktivteil 3 kann, wie in Figur 2 dargestellt, derart angeordnet sein, dass ein Magnetfeld 5 erzeugbar ist, welches im Wesentlichen senkrecht zur Rotationsachse 6 der elektrischen Maschine ist. Alternativ kann das Aktivteil 3 derart ausgestaltet werden, dass das Magnetfeld 5 im Wesentlichen parallel zur Rotationsachse 6 ist oder Mischformen vorliegen.

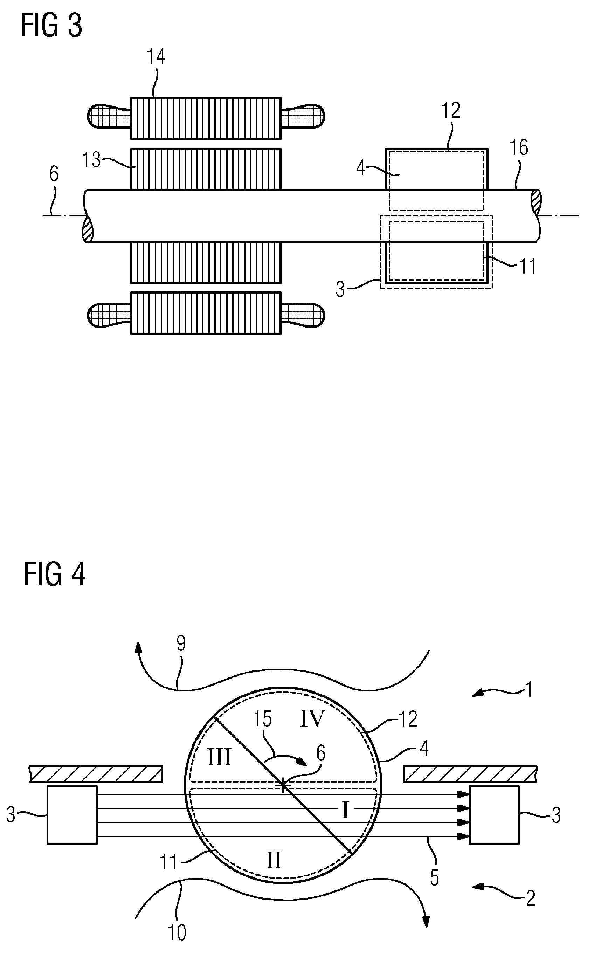

Figur 3 zeigt eine alternative Ansicht des zweiten Ausführungsbeispiels, wobei ein Längsschnitt durch die elektrische Maschine dargestellt ist. Dabei ist die in Figur 2 dargestellte Anordnung in der rechten Hälfte der Figur 3 angedeutet. Der Übersichtlichkeit halber wurde auf einige Details verzichtet.

Die elektrische Maschine verfügt über einen als Rotor ausgestalteten Läufer 13, welcher drehfest mit der Welle 16 verbunden ist und welcher innerhalb eines als Stator ausgebildeten Ständers 14 angeordnet ist. Der erste Kühlabschnitt 1 mit dem ersten Kühlmedium kann beispielsweise dazu dienen, den Ständer 14 und/oder den Läufer 13 zu kühlen, wobei mittels des Wärmetransportelementes 4 die vom ersten Kühlmedium aufgenommene Abwärme effektiv abtransportiert werden kann. Figur 4 zeigt ein drittes Ausführungsbeispiel der erfindungsgemäßen elektrischen Maschine.

Das Wärmetransportelement 4 weist vier Teilbereiche I, II, III und IV auf, welche sich bei einer gegebenen Drehrichtung 15 wie folgt darstellen. Der erste Teilbereich I ist innerhalb des ersten Elementbereiches 11 dort angeordnet, wo eine lokale Temperatur des Wärmetransportelementes 4 mittels einer lokalen Erhöhung der magnetischen Ordnung des Wärmetransportelementes 4 erhöhbar ist. Der erste Teilbereich I ist somit jener Bereich des jeweiligen Wärmetransportelementes 4, welcher bei einer Rotation des Wärmetransportelementes 4 einer Erhöhung des Magnetfeldes 5 ausgesetzt ist. Der zweite Teilbereich II ist in Drehrichtung 15 im Anschluss an den ersten Teilbereich I angeordnet, wobei über den zweiten Teilbereich II Abwärme vom Wärmetransportelement 4 an das zweite Kühlmedium übertragbar ist. Der dritte Teilbereich III ist innerhalb des zweiten Elementbereiches 12 dort angeordnet, wo eine lokale Temperatur des Wärmetransportelementes 4 mittels einer lokalen Erniedrigung der magnetischen Ordnung des Wärmetransportelementes 4 erniedrigbar ist. Somit befindet sich der dritte Teilbereich 3 dort, wo das Wärmetransportelement 4 bei einer Rotation einer Erniedrigung des Magnetfeldes 5 ausgesetzt ist. Der vierte Teilbereich IV ist in Drehrichtung 15 im Anschluss an den dritten Teilbereich III angeordnet, wobei über den vierten Teilbereich IV Abwärme vom ersten Kühlmedium an das Wärmetransportelement 4 übertragbar ist.

Der erste Kühlabschnitt 1 ist dabei derart ausgestaltet, dass das erste Kühlmedium zunächst zum vierten Teilbereich IV und anschließend zum dritten Teilbereich III geführt wird, wobei das zweite Kühlmedium im zweiten Kühlabschnitt 2 derart geführt wird, dass es zunächst beim zweiten Teilbereich II und anschließend beim ersten Teilbereich I im thermischen Kontakt mit dem Wärmetransportelement 4 ist. Somit wird für beide Kühlmedien eine Gegenstromkühlung verwirklicht. Zur Führung des jeweiligen Kühlmediums können Umlenkelemente vorgesehen sein, welche insbesondere als Düse bzw. Diffusor ausgebildet sind.

Das Aktivteil 3 kann, wie in Figur 4 dargestellt, derart angeordnet sein, dass ein Magnetfeld 5 erzeugbar ist, welches im Wesentlichen senkrecht zur Rotationsachse 6 der elektrischen Maschine ist. Alternativ kann das Aktivteil 3 derart ausgestaltet werden, dass das Magnetfeld 5 im Wesentlichen parallel zur Rotationsachse 6 ist oder Mischformen vorliegen.

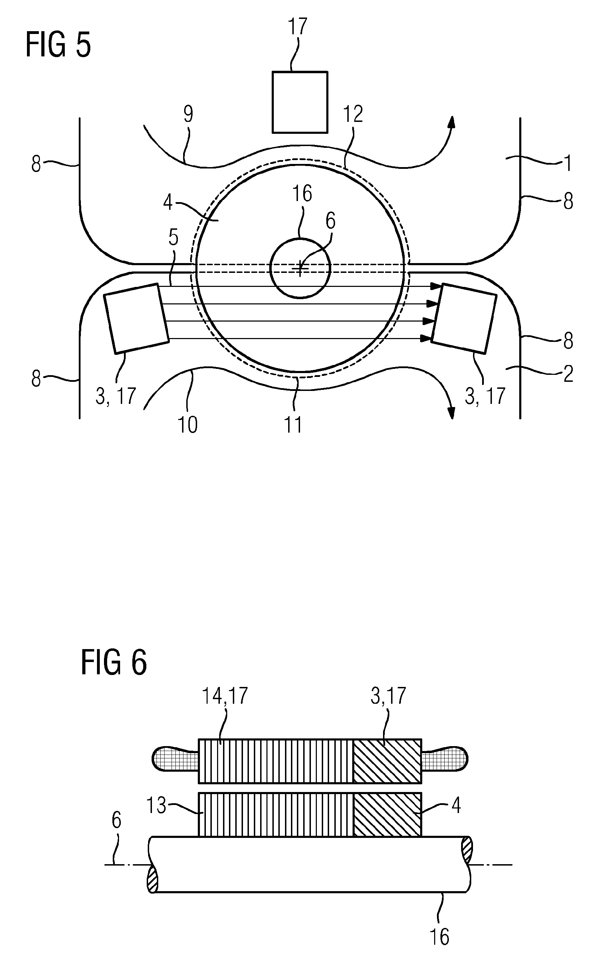

Figur 5 zeigt ein viertes Ausführungsbeispiel der erfindungsgemäßen elektrischen Maschine. Da einige Ähnlichkeiten mit dem zweiten Ausführungsbeispiel vorliegen, werden Unterschiede zwischen dem vierten Ausführungsbeispiel und dem zweiten Ausführungsbeispiel erläutert.

Gemäß dem vierten Ausführungsbeispiel wird das Aktivteil 3 durch zwei der Ständerwicklungen 17 verwirklicht, mittels welchen das Wärmetransportelement 4 teilweise bzw. vorrübergehend mit dem Magnetfeld 5 beaufschlagbar ist.

Figur 6 zeigt eine alternative Ansicht des vierten Ausführungsbeispiels, wobei ein Längsschnitt durch die elektrische Maschine dargestellt ist. Der Übersichtlichkeit halber wurde auf einige Details verzichtet.

Die elektrische Maschine verfügt über einen als Rotor ausgestalteten Läufer 13, welcher drehfest mit der Welle 16 verbunden ist und welcher innerhalb eines als Stator ausgebildeten Ständers 14 angeordnet ist. Beispielsweise weist der Läufer 13 ein Blechpaket auf, an welches sich in axialer Richtung das Wärmetransportelement 4 anschließt. Dabei sind der Läufer 13 mit seinem Blechpaket und Teile des Wärmetransportelements 4 anhand der Ständerwicklung 17 mit dem Magnetfeld 5 beaufschlagbar, wobei zwei der Ständerwicklungen 17 im axialen Bereich des Wärmetransportelementes 4 als das Aktivteil 3 fungieren, wie in Figur 5 angedeutet.

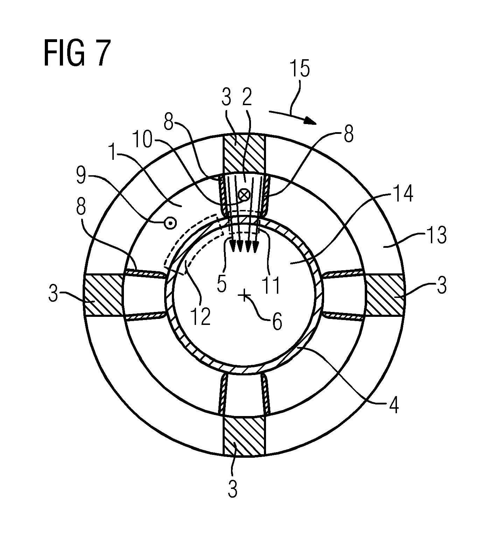

Figur 7 zeigt ein fünftes Ausführungsbeispiel der erfindungsgemäßen elektrischen Maschine.

Die elektrische Maschine ist als Außenläufer ausgeführt, wobei radial innen ein Ständer 14 mit einem Wärmetransportelement 4 und radial außen ein Läufer 13 koaxial zum Ständer 14 angeordnet ist, wobei der Läufer 13 um eine Rotationsachse 6 in Drehrichtung 15 drehbar ist. Der Läufer 13 verfügt über mehrere Aktivteile 3, welche beispielsweise als Permanentmagnete ausgeführt sein können, sowie über Umlenkelemente 8, welche drehfest mit dem übrigen Läufer 13 verbunden sind. Die Umlenkelemente 8 sind paarweise derart angeordnet, dass jeweils ein erster Kühlabschnitt 1 und ein zweiter Kühlabschnitt 2 ausbildbar sind, in welchem jeweils ein erstes Kühlmedium bzw. ein zweites Kühlmedium führbar ist, wie durch den aus der Zeichnungsebene heraus weisenden bzw. hinein weisenden Pfeil mit dem Bezugszeichen 9 bzw. 10 angedeutet ist.

Dabei ist ein jeweiliger erster Elementbereich 11 des Wärmetransportelementes 4 mit einem Magnetfeld 5 mittels des jeweiligen Aktivteils 3 beaufschlagbar, wobei ein jeweiliger zweiter Elementbereich 12 des Wärmetransportelementes 4 sich in Drehrichtung 15 an den jeweiligen ersten Elementbereich 11 anschließt und nicht bzw. weniger ausgeprägt mit dem Magnetfeld 5 beaufschlagbar ist.

Durch die Rotation des Läufers 13 werden Teile des Wärmetransportelementes 4 abwechselnd einer Erhöhung bzw. einer Erniedrigung des Magnetfeldes 5 unterworfen, so dass das jeweilige Teil des Wärmetransportelementes 4 adiabatisch erwärmt bzw. abgekühlt wird. Mittels der mitrotierenden Umlenkelemente 8 ist das zweite Kühlmedium derart führbar, dass das zweite Kühlmedium stets im thermischen Kontakt mit dem jeweiligen zusätzlich erwärmten Bereich des Wärmetransportelementes 4 ist, wobei das erste Kühlmedium anhand der mitrotierenden Umlenkelemente 8 derart führbar ist, dass das erste Kühlmedium stets im thermischen Kontakt mit dem jeweiligen zusätzlich abgekühlten Bereich des Wärmetransportelementes 4 ist. Insgesamt wird somit ein besonders wirkungsvoller Transfer der Abwärme des ersten Kühlmediums an das zweite Kühlmedium ermöglicht.

Zusammenfassend betrifft die Erfindung eine elektrische Maschine umfassend einen ersten Kühlabschnitt, in welchem ein erstes Kühlmedium zur Kühlung der elektrischen Maschine vorgesehen ist, und einen zweiten Kühlabschnitt, in welchem ein zweites Kühlmedium vorgesehen ist. Um eine Alternative zu bekannten Kühlsystemen für elektrische Maschinen bereitzustellen, wird vorgeschlagen, dass die elektrische Maschine zumindest ein Aktivteil und zumindest ein Wärmetransportelement umfassend ein magnetokalorisches Material aufweist, wobei das zumindest eine Wärmetransportelement zumindest teilweise und/oder zumindest vorübergehend mittels des zumindest einen Aktivteils mit einem Magnetfeld beaufschlagbar ist, wobei das zumindest eine Aktivteil und das zumindest eine Wärmetransportelement derart ausgestaltet sind, dass unter Ausnutzung des magnetokalorischen Effekts Abwärme vom ersten Kühlmedium an das zweite Kühlmedium übertragbar ist.

## Patentansprüche

1. Elektrische Maschine umfassend
- einen ersten Kühlabschnitt (1), in welchem ein erstes Kühlmedium zur Kühlung der elektrischen Maschine vorgesehen ist, und
- einen zweiten Kühlabschnitt (2), in welchem ein zweites Kühlmedium vorgesehen ist,
**gekennzeichnet durch**
- zumindest ein Aktivteil (3) und
- zumindest ein Wärmetransportelement (4) umfassend ein magnetokalorisches Material,
wobei das zumindest eine Wärmetransportelement (4) zumindest teilweise und/oder zumindest vorübergehend mittels des zumindest einen Aktivteils (3) mit einem Magnetfeld (5) beaufschlagbar ist,
wobei das zumindest eine Aktivteil (3) und das zumindest eine Wärmetransportelement (4) derart ausgestaltet sind, dass unter Ausnutzung des magnetokalorischen Effekts Abwärme vom ersten Kühlmedium an das zweite Kühlmedium übertragbar ist.

2. Elektrische Maschine nach Anspruch 1,
wobei das jeweilige Wärmetransportelement (4) um eine Rotationsachse (6) drehbar und/ oder translatorisch bewegbar in der elektrischen Maschine angeordnet ist,
wobei ein erster Elementbereich (11) des jeweiligen Wärmetransportelementes (4) in einem ersten Maschinenbereich der elektrischen Maschine angeordnet ist, welcher mittels des zumindest einen Aktivteils (3) mit dem Magnetfeld (5) beaufschlagbar ist,
wobei ein zweiter Elementbereich (12) des jeweiligen Wärmetransportelementes (4) in einem zweiten Maschinenbereich außerhalb des ersten Maschinenbereichs angeordnet ist.

3. Elektrische Maschine nach Anspruch 2,
wobei das jeweilige Aktivteil (3) derart ausgestaltet ist, dass das Magnetfeld (5) im Wesentlichen entlang der Rotationsachse (6) ausgerichtet ist.

4. Elektrische Maschine nach Anspruch 2,
wobei das jeweilige Aktivteil (3) derart ausgestaltet ist, dass das Magnetfeld (5) im Wesentlichen senkrecht zur Rotationsachse (6) ausgerichtet ist.

5. Elektrische Maschine nach einem der Ansprüche 2-4,
wobei der erste Kühlabschnitt (1) derart ausgestaltet ist, dass Abwärme von dem ersten Kühlmedium an den zweiten Elementbereich (12) übertragbar ist,
wobei der zweite Kühlabschnitt (2) derart ausgestaltet ist, dass Abwärme vom ersten Elementbereich (11) an das zweite Kühlmedium übertragbar ist.

6. Elektrische Maschine nach einem der Ansprüche 2-5,
wobei das jeweilige Wärmetransportelement (4) zumindest vier Teilbereiche (I, II, III, IV) aufweist,
wobei bei einer gegebenen Drehrichtung (15) des jeweiligen Wärmetransportelementes (4)
- der erste Teilbereich (I) innerhalb des ersten Elementbereiches (11) dort angeordnet ist, wo eine lokale Temperatur des Wärmetransportelementes (4) mittels einer lokalen Erhöhung der magnetischen Ordnung des Wärmetransportelementes (4) erhöhbar ist,
- der zweite Teilbereich (II) innerhalb des ersten Elementbereiches (4) in Drehrichtung (15) im Anschluss an den ersten Teilbereich (I) angeordnet ist,
wobei Abwärme vom jeweiligen Wärmetransportelement (4) über den zweiten Teilbereich (II) an das zweite Kühlmedium übertragbar ist,
- der dritte Teilbereich (III) innerhalb des zweiten Elementbereiches (12) dort angeordnet ist, wo eine lokale Temperatur des Wärmetransportelementes (4) mittels einer lokalen Erniedrigung der magnetischen Ordnung des Wärmetransportelementes (4) erniedrigbar ist,
- der vierte Teilbereich (IV) innerhalb des zweiten Elementbereiches (12) in Drehrichtung (15) im Anschluss an den dritten Teilbereich (III) angeordnet ist,
wobei Abwärme vom ersten Kühlmedium an das jeweilige Wärmetransportelement (4) über den vierten Teilbereich (IV) übertragbar ist.

7. Elektrische Maschine nach Anspruch 6,
wobei der erste Kühlabschnitt (1) derart ausgestaltet ist, dass das erste Kühlmedium zunächst zum vierten Teilbereich (IV) und anschließend zum dritten Teilbereich (III) des jeweiligen Wärmetransportelementes (4) führbar ist.

8. Elektrische Maschine nach Anspruch 6 oder 7,
wobei der zweite Kühlabschnitt (2) derart ausgestaltet ist, dass das zweite Kühlmedium zunächst zweiten Teilbereich (II) und anschließend zum ersten Teilbereich (I) des jeweiligen Wärmetransportelementes (4) führbar ist.

9. Elektrische Maschine nach einem der vorhergehenden Ansprüche,
wobei das jeweilige Wärmetransportelement (4) an seiner Oberfläche zumindest ein konvexes Element zur Oberflächenvergrößerung aufweist.

10. Elektrische Maschine nach Anspruch 9,
wobei das jeweilige konvexe Element als Rippe, Steg oder Propellerblatt ausgeführt ist.

11. Elektrische Maschine nach einem der vorhergehenden Ansprüche,
wobei zumindest ein Umlenkelement (8) vorgesehen ist, mittels welchem jeweils das erste Kühlmedium und/oder das zweite Kühlmedium zum jeweiligen Wärmetransportelement (4) hin führbar ist bzw. vom jeweiligen Wärmetransportelement (4) weg führbar ist und mittels welchem jeweils der erste Kühlabschnitt (1) strömungstechnisch vom zweiten Kühlabschnitt (2) im Wesentlichen abtrennbar ist.

12. Elektrische Maschine nach einem der vorhergehenden Ansprüche,
wobei die elektrische Maschine einen Läufer (13) und einen Ständer (14) aufweist,
wobei zumindest ein Teil des Läufers (13) und/oder des Ständers (14) als das Aktivteil (3) ausgebildet ist.

13. Elektrische Maschine nach einem der vorhergehenden Ansprüche,
wobei die elektrische Maschine als Generator oder Elektromotor ausgeführt ist.

14. Elektrische Maschine nach einem der vorhergehenden Ansprüche,
wobei die elektrische Maschine mit einer Leistung von mehr als 1 MW, insbesondere mehr als 10 MW, betreibbar ist.
